# EUROPÄISCHE PATENTSCHRIFT

(11) **EP 4 536 409 B1**
(45) Veröffentlichungstag und Bekanntmachung des Hinweises auf die Patenterteilung: **19.11.2025**
(21) Anmeldenummer: 23732877.8
(22) Anmeldetag: 12.06.2023
(51) Int. Cl.: B02C 19/20, A47J 43/25

(54) **VORRICHTUNG UND VERFAHREN ZUM ZERKLEINERN UND MISCHEN VON FESTSTOFFEN**
DEVICE AND METHOD FOR COMMINUTING AND MIXING SOLIDS
DISPOSITIF ET PROCÉDÉ DE BROYAGE ET DE MÉLANGE DE SOLIDES

(30) Priorität: 13.06.2022 DE 102022205973
(43) Veröffentlichungstag der Anmeldung: 16.04.2025
(73) Patentinhaber: hs-tumbler GmbH, 49610 Quakenbrück (DE)
(72) Erfinder: HUKELMANN, Bernhard, 49610 Quakenbrück (DE)
(74) Vertreter: Taruttis, Stefan Georg
(86) Internationale Anmeldenummer: PCT/EP2023/065649
(87) Internationale Veröffentlichungsnummer: WO 2023/242119

(56) Entgegenhaltungen:
- EP-A2- 2 347 687
- WO-A1-2013/079919
- CN-A- 108 745 559
- DE-A1- 4 332 530
- DE-B3- 102020 134 505
- DE-B4- 102007 007 714

## Beschreibung

Die Erfindung betrifft eine Vorrichtung und ein Verfahren, das bevorzugt unter Verwendung der Vorrichtung durchgeführt wird, zum Zerkleinern und/oder Mischen von Feststoffen, z.B. Lebensmittelrohstoffen, z.B. zur Verwendung als haushaltsübliche Küchenmaschine. Die Feststoffe können zu rezyklierende Altstoffe sein, z.B. Batterien, Verbundwerkstoffe mit Glas, Keramik, Kunststoff und/oder Metall, oder Elektroschrott.

Die Vorrichtung und das Verfahren haben den Vorteil, Feststoffe zu zerkleinern und die Stücke daraus in einem Behälter mechanisch zu belasten, optional mit Zusatzstoffen intensiv zu mischen. Die Vorrichtung und das Verfahren haben den Vorteil, Feststoffe, die feste Lebensmittel sind, z.B. Lebensmittelrohstoffe, insbesondere solche pflanzlichen Ursprungs, z.B. Gemüse, Obst, oder Lebensmittel tierischen Ursprungs, z.B. Fleisch- oder Wurstwaren oder Käse, zu zerkleinern und in einem Behälter aufzufangen, in dem die durch das Zerkleinern hergestellten Lebensmittelstücke optional zusätzlich mit Zusatzstoffen gemischt und/oder durch mechanische Belastung weichgemacht werden können. Zusatzstoffe sind z.B. Speisesalz, Gewürze, Essig, Speiseöl, Lebensmittelrohstoffe sind bevorzugt rohe Pflanzenteile, z.B. Gemüse, z.B. Kohl, Kartoffeln, Süßkartoffeln, Lauch, Zwiebeln, Wurzelgemüse etc., oder Obst, z.B. Äpfel. Die Vorrichtung zeichnet sich in einer Ausführungsform dadurch aus, dass sie zumindest eine Schneidkante, stellvertretend auch als Messer in Bezug genommen, aufweist, die am Behälter festgelegt ist und/oder optional in dem Behälter ein Mischelement festgelegt ist. Bevorzugt weist der Behälter kein relativ zum Behälter bewegliches Mischelement auf, insbesondere keinen Rührer, so dass der Behälter ohne ein Lager für ein bewegliches Mischelement ausgebildet ist.

Die Vorrichtung hat den Vorteil, Feststoffe, z.B. feste Lebensmittel, zu schneiden, wobei die erzeugten Stücke direkt einem Behälter zugeführt werden und in diesem Behälter optional mit Zusatzstoffen gemischt und belastet werden können.

Die Vorrichtung ist zur Verwendung in einem Verfahren zum Zerkleinern von Rezyklingmaterial geeignet, z.B. zum Zerkleinern von Verbundwerkstoffen, von Elektroschrott, z.B. von Leiterplatten, Batterien, optional einschließlich Gehäusen aus Kunststoff und/oder Metall.

Die Vorrichtung ist überdies zur Durchführung eines Verfahrens eingerichtet, das bei kurzer Dauer, z.B. innerhalb von maximal 1h, maximal 30 min, maximal 20 min, maximal 15 min, maximal 10 min, bevorzugt innerhalb von maximal 5 min, maximal 3 min, maximal 120s, maximal 60s oder maximal 30s, eine mechanische Belastung der Stücke, die z.B. Lebensmittelstücke sind, z.B. bis zum Austritt von Zellsaft und/oder bis zum Weichwerden der Lebensmittelstücke, und/oder eine intensive Durchmischung der Stücke in dem Behälter ergibt.

### Stand der Technik

Es ist bekannt, zum Zerkleinern von Feststoffen Walzen oder Mühlen einzusetzen und insbesondere zum Zerkleinern von festen Lebensmitteln Küchenmaschinen einzusetzen, die auf einer rotierenden Walze oder Scheibe Messer aufweisen, auf die ein Zuführschacht gerichtet ist.

Die WO 2013/079919 A1 beschreibt für eine Küchenmaschine das Beaufschlagen eines rotierenden Messers mit Vibrationen mittels eines Piezoelements.

Die WO 2015/114118 A1 beschreibt die Herstellung von Fleischwaren durch Belasten roher Fleischstücke in einem Behälter, der entlang zweier Achsen zu einer zwangsgeführten Hin- und Herbewegung mit einer Frequenz von zumindest 0,5 Hz angetrieben ist. Die rohen Fleischstücke nehmen durch die Belastung z.B. wässrige oder ölige Zusammensetzungen auf oder können miteinander verkleben.

Die EP 3 620 067 A1 beschreibt ein Misch- und Knetverfahren für ein Polymer mit einem weiteren Inhaltsstoff, von denen zumindest einer flüssig ist, durch Hin- und Herbewegen eines Behälters bei zumindest 1 Hz entlang zweier Achsen bei unterschiedlichen Frequenzen.

### Aufgabe der Erfindung

Der Erfindung stellt sich die Aufgabe, eine Vorrichtung und ein damit durchführbares Verfahren anzugeben, mit denen feste Lebensmittel, z.B. pflanzliche Lebensmittelrohstoffe zerkleinert, insbesondere geschnitten, und optional anschließend intensiv mechanisch belastet und/oder gemischt werden können.

### Beschreibung der Erfindung

Die Erfindung löst die Aufgabe mit den Merkmalen der Ansprüche und stellt insbesondere eine Vorrichtung zum Zerkleinern von Feststoffen zu Stücken, insbesondere von festen Lebensmitteln zu Lebensmittelstücken, optional anschließenden mechanischen Belasten und/oder Mischen der Stücke, insbesondere Lebensmittelstücke, und optional Zusatzstoffen bereit, die
einen Behälter aufweist, z.B. mit einem Querschnitt von zumindest 10 cm Durchmesser, an dessen erster endständiger Querschnittsöffnung zumindest eine Schneidkante, die z.B. ein Messer ist, angeordnet ist, wobei die erste Querschnittsöffnung eine Einlassöffnung bildet oder optional von einem ersten Deckel überdeckt ist, der eine Einlassöffnung aufweist, wobei der Behälter parallel oder in einem Winkel zu der Ebene, in der sich die erste Querschnittsöffnung erstreckt, zu einer Hin- und Herbewegung angetrieben ist, die linear sein kann, insbesondere von einem Exzenterantrieb angetrieben, und die bevorzugt durch Überlagerung der Bewegung entlang zumindest zweier Achsen, die in einem Winkel zueinander liegen, bei gleichen, bevorzugt verschiedenen Frequenzen erhältlich ist,
mit einem Zuführschacht, dessen Auslassöffnung im Bereich der ersten Querschnittsöffnung angeordnet ist und dessen gegenüberliegende Zuführöffnung von seiner Auslassöffnung beabstandet ist. Der Behälter kann z.B. einen Durchmesser von bis zu 100 cm, bis 70 cm oder bis 50 cm oder bis 30 cm aufweisen.

Die der ersten Querschnittsöffnung gegenüberliegende endständige zweite Querschnittsöffnung des Behälters ist durch einen zweiten Deckel reversibel verschließbar oder durch einen zweiten Deckel überdeckt, der fest mit der Behälterwand verbunden sein kann.

Der Winkel, in dem der Behälter zu der Ebene, in der sich die erste Querschnittsöffnung erstreckt, zur Hin- und Herbewegung angetrieben ist, kann z.B. 5 bis 45°, z.B. bis 30° oder bis 10° betragen.

Bevorzugt ist der Zuführschacht senkrecht zu der Ebene angeordnet, in der die erste Querschnittsöffnung, optional mit einem ersten Deckel, zur Hin- und Herbewegung angetrieben ist.

Bevorzugt weist die Vorrichtung einen Gehäusedeckel auf, der sich parallel zu der Ebene und über den Bereich erstreckt, in dem die erste Querschnittsöffnung zur Hin- und Herbewegung angetrieben ist. Optional ist der Zuführschacht schwenkbar oder fest mit dem Gehäusedeckel verbunden. Bevorzugt ist der Gehäusedeckel Teil eines Gehäuses, das den Raum umgibt, in dem der Behälter die Hin- und Herbewegung ausführt.

Bevorzugt weist der Zuführschacht einen Querschnitt und eine Länge auf, entlang derer eine menschliche Hand nicht zur Auslassöffnung bewegt werden kann.

Der Behälter ist generell bevorzugt nicht zur vollständigen Rotation angetrieben, optional ist die Vorrichtung zur Verschwenkung des Behälters während der Hin- und Herbewegung eingerichtet, z.B. zur Verschwenkung hin und her in der Ebene, in der der Behälter zur Hin- und Herbewegung angetrieben ist.

Für die Hin- und Herbewegung des Behälters kann die Vorrichtung einen manuellen Antrieb aufweisen, z.B. eine Antriebskurbel, oder zumindest einen Antriebsmotor.

Die Vorrichtung hat durch die Einrichtung des Behälters zur Hin- und Herbewegung den Vorteil, dass die erhaltenen Stücke, insbesondere Lebensmittelstücke, unmittelbar nach dem Schneiden belastet und gemischt werden können, so dass sie, insbesondere nach Zusetzen von Zusatzstoffen, unmittelbar mit Zusatzstoffen kontaktiert werden. Zusatzstoffe für zu rezyklierende Feststoffe können z.B. Wasser und organische Lösungsmittel sein. Als Zusatzstoff für Lebensmittelstücke sind z.B. lebensmittelgeeignete Säuren oder Antioxidantien in wässriger oder öliger Zusammensetzung geeignet, um Schnittflächen der Lebensmittelstücke unmittelbar nach dem Schneiden zu behandeln, insbesondere um eine Bräunungsreaktion zu vermeiden

Bevorzugt weist der Antrieb für den Behälter einen Schwenkarm auf, dessen erstes Ende in einem ersten Schwenklager, das ein Kugelgelenk ist, frei schwenkbar gelagert ist. Das zweite Ende des Schwenkarms ist am ersten Ende eines ersten Hebels schwenkbar angelenkt, und der erste Hebel ist an seinem gegenüberliegenden zweiten Ende von einem Exzenterantrieb zur Hin- und Herbewegung angetrieben. In dieser Ausführungsform ist der Schwenkarm mittels nur eines Hebels, der von einem Exzenterantrieb angetrieben ist, zur Hin- und Herbewegung angetrieben.

In einer bevorzugten Ausführungsform ist zusätzlich zum ersten Hebel am zweiten Ende des Schwenkarms das erste Ende eines zweiten Hebels schwenkbar angelenkt, der in einem Winkel von 60 bis 120° zum ersten Hebel angeordnet ist. Bevorzugt sind erster und zweiter Hebel in einer Ebene angeordnet, die etwa senkrecht zur Erstreckung des ersten Schwenkarms liegt, optional parallel zu der Ebene, in der das Gestellteil liegt, an dem der zumindest eine, bevorzugt zwei Antriebe angebracht sind, die Exzenterantriebe sind. Alternativ können einer oder beide von erstem und zweiten Hebel in einem Winkel von z.B. 85 bis 45° oder bis 60° zur Längsachse des Schwenkarms angeordnet sein. Der erste Hebel ist durch einen an seinem zweiten Ende angelenkten ersten Exzenterantrieb zur Hin- und Herbewegung entlang seiner Längsachse angetrieben. Der zweite Hebel ist durch einen an seinem zweiten Ende angelenkten zweiten Exzenterantrieb zur Hin- und Herbewegung entlang seiner Längsachse angetrieben. Dadurch sind der erste Hebel und der zweite Hebel zur Verschwenkung des ersten Schwenkarms im Schwenklager und zur Verschwenkung des zweiten Endes des Schwenkarms entlang der Längsachsen von erstem Hebel und zweiten Hebel eingerichtet, wobei sich durch die Verschwenkung im ersten Schwenklager das zweite Ende des ersten Schwenkarms in größeren und kleineren Abstand zur Ebene des Gestellteils hin- und herbewegt.

Bevorzugt ist der Behälter an einer Behälteraufnahme lösbar oder festgelegt angebracht. Der Zuführschacht ist bevorzugt an einem Gehäusedeckel angebracht, der den Bereich, der bei der Hin- und Herbewegung, insbesondere entlang einer Bahnkurve, des Behälters überstrichen wird, überdeckt.

Durch die Hin- und Herbewegung des Behälters entlang des Zuführschachts, der ortsfest angebracht ist, wird die an der ersten Querschnittsöffnung angeordnete Schneidkante, nachfolgend als Messer bezeichnet, relativ zum Zuführschacht hin- und herbewegt und schneidet durch den Zuführschacht zugeführte Feststoffe in Stücke, z.B. Lebensmittelrohstoffe in Lebensmittelstücke, die sich durch die Zuführöffnung in den Behälter bewegen können. Bevorzugt ist die Einlassöffnung des Behälters von der ersten Querschnittsöffnung des Behälters gebildet, die nur von dem zumindest einen Messer, optional einem Träger, der das zumindest eine Messer trägt, anteilig überdeckt ist. Das zumindest eine Messer und optional ein das Messer tragender Träger, können in der Ebene der endständigen ersten Querschnittsöffnung des Behälters oder in einem Abstand vom Behälter angeordnet sein. Bevorzugt ist das zumindest eine Messer am Behälter festgelegt, oder das zumindest eine Messer ist lösbar mit dem Behälter verrastbar, z.B. mittels eines Bajonettverschlusses.

Bevorzugt weist der Behälter zumindest zwei Messer auf, die in einem Winkel zueinander angeordnet sind, z.B. in 60 bis 120°, bevorzugt 90° zueinander, insbesondere in einer gemeinsamen Ebene, die z.B. parallel zur Ebene der ersten Querschnittsöffnung liegt. Dabei kann jedes der Messer eine Schneidkante aufweisen, die über eine Ebene vorstehende Bereiche und unter der Ebene liegende Bereiche aufweist, um Nuten mit zwischenliegenden vorstehenden Stegen zu schneiden. Bei zwei Messern, die in einem Winkel zueinander angeordnet sind, z.B. in 60 bis 120°, bevorzugt 90° zueinander, und einer Hin- und Herbewegung jeweils versetzt, insbesondere senkrecht zu einem der Messer bzw. zu deren Schneidkante, entlang der Auslassöffnung des Zuführschachts werden Schnittflächen mit versetzten Nuten und Stegen erzeugt, z.B. Stücke mit gegenüberliegenden Schnittflächen, deren Nuten um 60 bis 120°, bevorzugt 90° zueinander versetzt sind. Bevorzugt weist jedes Messer zwei einander gegenüberliegende Schneidkanten auf, die z.B. von einem einstückigen oder zweiteiligen Messer gebildet sein können.

Bevorzugt ist die Schneidkante oder die einander gegenüberliegenden Schneidkanten des zumindest einen Messers in einem Winkel von kleiner 90°, z.B. 85° bis 30° zur Längsachse der Hin- und Herbewegung des Behälters in dem Bereich angeordnet, in dem der Zuführschacht angeordnet ist.

Durch die Einrichtung der Vorrichtung zur Hin- und Herbewegung des Behälters, an dessen erster Querschnittsöffnung zumindest ein Messer mit bevorzugt zwei gegenüberliegenden Schneidkanten angebracht ist, ist die Vorrichtung zum Schneiden von Feststoffen, insbesondere von Lebensmittelrohstoffen in jeder der beiden Richtungen der Hin- und Herbewegung eingerichtet.

Optional ist der Querschnitt des Behälters von einer Wand aufgespannt, die in Abständen angeordnete Vorsprünge aufweist, die in das Behältervolumen ragen, oder ist von einer glatten Wand aufgespannt.

Der Behälter weist bevorzugt einen runden Querschnitt auf, oder einen Querschnitt, der zumindest 3, zumindest 4, zumindest 5, zumindest 6, zumindest 7 oder zumindest 8 Ecken aufweist, z.B. jeweils maximal 20 Ecken. Der Durchmesser des Behälters kann z.B. zwischen 10 und 40 cm betragen, z.B. 10 oder 20 cm bis jeweils 35 oder bis 30 cm. Die Höhe des Behälters, senkrecht zur Ebene seiner endständigen Querschnittsöffnung oder seiner Einlassöffnung bestimmt, kann z.B. 10 bis 50 cm betragen, optional gleich seinem Durchmesser sein.

Der Querschnitt führt bei der Hin- und Herbewegung entlang Bahnkurven, die z.B. durch Hin- und Herbewegung entlang zweier Achsen, die in einem Winkel zueinander und in der Ebene des Querschnitts des Behälters liegen, zu einer Relativbewegung der Lebensmittelstücke, die in den Behälter gelangt sind, gegen die Behälterwand in einer kontinuierlichen Bewegung. Es wird angenommen, dass die intensive Belastung und effektive Durchmischung von geschnittenen Stücken, insbesondere Lebensmittelstücken, durch das Verfahren auch darauf zurückzuführen ist, dass die kontinuierliche Bewegung den Inhalt des Behälters vollständig erfasst, z.B. ohne dass sich Stücke oder Zusatzstoffe im Behälter teilweise ablagern oder abtrennen können.

Die in den Querschnitt des Behälters ragenden Vorsprünge können z.B. von der Wand eine Höhe von 1/30 bis zu 1/1 oder bis zu 1/2 oder bis zu 1/5 oder bis zu 1/10 des Durchmessers des Behälters, z.B. 1/20 bis 1/1 oder bis 1/2 des Durchmessers des Behälters aufweisen, insbesondere eine Höhe von 0,1 bis 20 mm, z.B. zumindest 2 mm, zumindest 3 mm, 4 mm oder zumindest 5 mm, z.B. jeweils bis 18 mm oder bis 15 mm.

In einer Ausführungsform gehen die Seitenflächen der Vorsprünge kontinuierlich in die dazwischen ausgebildeten Ausnehmungen über.

In einer alternativen Ausführungsform sind die Vorsprünge in einem Abstand zur Behälterwand angeordnet, so dass die Seitenflächen der Vorsprünge nicht in die Behälterwand übergehen bzw. nicht mit der Behälterwand verbunden sind. In dieser Ausführungsform können die Vorsprünge z.B. durch ein von der Behälterwand beabstandet angebrachtes Blech gebildet sein, das Durchbrechungen aufweist, z.B. durchgehende runde Bohrungen oder durchgehende Langlöcher. Ein solches Blech kann z.B. in einem Abstand von 1 bis 30 mm von der Behälterwand beabstandet angebracht sein, bevorzugt parallel zur Behälterwand, z.B. durch Stützen mit der Behälterwand verbunden sein.

Es hat sich gezeigt, dass Vorsprünge, die sich über die Behälterwand in den Querschnitt des Behälters erstrecken, die Durchmischung von Inhaltsstoffen bei der Hin- und Herbewegung des Behälters beschleunigen, z.B. im Vergleich mit einem zylindrischen Behälter mit ebener Wand.

Optional weist die Wand des Behälters eine glatte und zylindrische Innenoberfläche auf.

Optional ist im Behälter ein herausnehmbares Gitter angeordnet, das optional von einem Rahmen eingefasst ist, wobei das Gitter oder der Rahmen einen Umfang aufweist, der parallel zur Längsachse oder entlang der Längsachse des Behälters in diesem klemmt. Das Gitter aus beabstandeten, bevorzugt parallelen Stegen bestehen, oder gekreuzte Stege aufweisen. Generell kann das Gitter aus Stangen, bevorzugt Rundstangen, oder einem Lochblech, optional zwei parallelen Lochblechen oder in zwei parallelen Ebenen angeordneten Stangen gebildet sein.

Die Vorrichtung ist zur Hin- und Herbewegung des Behälters entlang einer Bahnkurve mit einer Frequenz von zumindest 1 Hz entlang zweier Achsen mit jeweils unterschiedlicher Frequenz über einen Weg entlang jeder Achse von bevorzugt zumindest 2,5 mm, zumindest 1cm, zumindest 2 cm oder zumindest 3 cm oder zumindest 10 cm, z.B. bis 50 cm, bis 30 cm, bis 20 oder, bei kürzeren Wegen, bis 10 cm eingerichtet.

Die Hin- und Herbewegung des Behälters kann sich beispielsweise über einen Weg von zumindest 5 mm bevorzugter zumindest 10 mm bevorzugter zumindest 2 cm, bevorzugter zumindest 3 cm oder zumindest 5 cm, zumindest 10 cm oder zumindest 15 cm, z.B. jeweils bis 40 cm, bis 30 cm oder bis 20 cm oder bis 15 cm erstrecken. Weiter bevorzugt ist die Hin- und Herbewegung des Behälters harmonisch entlang einer Bahnkurve. Die Hin- und Herbewegung des Behälters kann linear oder nicht-linear sein oder kann sinusförmig, schleifenförmig oder bogenförmig sein, bevorzugt entlang einer Bahnkurve verlaufen, die bevorzugt in der Ebene liegt, in der sich die erste Querschnittsöffnung erstreckt.

Denn generell fördert eine nicht-lineare Bewegungsachse, vorzugsweise eine Hin- und Herbewegung entlang einer Bahnkurve, die eine Lissajous-Figur oder Hypozykloide sein kann, zu einer nicht-linearen Bewegung des Messers entlang des Zuführschachts, so dass feste Lebensmittel mit glatterem Schnitt zerkleinert werden. Weiterhin fördert die nicht-lineare Hin- und Herbewegung eine gleichmäßige und intensive Durchmischung, auch bei Lebensmittelstücken, die ein ähnliches oder gleiches spezifisches Gewicht und/oder eine ähnliche Größe aufweisen. Jede Bewegungsachse für sich kann linear verlaufen, so dass die nicht-lineare Bewegung des Behälters aus der Überlagerung der Bewegungen entlang zweier Bewegungsachsen erzeugt wird. Optional kann sich die Hin- und Herbewegung zusätzlich in eine dritte Dimension, senkrecht zu der von der ersten und zweiten Achse aufgespannten Ebene, erstreckten.

Der Behälter ist zur Hin- und Herbewegung entlang zumindest einer Bahnkurve angetrieben, die durch Überlagerung der Hin- und Herbewegung entlang zumindest zweier Achsen, die in einem Winkel zueinander liegen, wobei bevorzugt zwei der Achsen in der Ebene des Querschnitts des Behälters liegen, erzeugbar ist, wobei die Hin- und Herbewegung entlang jeder Achse bei verschiedenen Frequenzen und/oder mit Phasenversatz erfolgt. Die Bahnkurve ist durch die Überlagerung der Hin- und Herbewegung entlang zweier oder dreier Achsen mit verschiedenen Frequenzen und/oder mit Phasenversatz erzeugbar und weist eine Abfolge von Bahnsegmenten auf, von denen zumindest eines, bevorzugt jedes, genau eine vollständige Hin- und Herbewegung entlang der Achse, entlang derer die Hin- und Herbewegung mit der niedrigeren Frequenz erfolgt, umfasst oder daraus besteht, wobei die überlagerten Hin- und Herbewegungen mit der höheren Frequenz oder der gleichen Frequenz, jeweils optional mit Phasenversatz, entlang der anderen Achse oder Achsen umfasst wird. Dabei bildet die niedrigere Frequenz der vollständigen Hin- und Herbewegung die Frequenz der Abfolge der Bahnsegmente. Für jedes Bahnsegment ist ein Frequenzverhältnis der Hin- und Herbewegung entlang zweier Achsen von maximal 1:20 oder maximal 1:15 oder maximal 1:10, maximal 1:4 oder maximal 1:3 bevorzugt, bevorzugter zwischen 1:1 bis 1:2, noch bevorzugter größer als 1:1 bis 1:2 oder bis 1:1,5, z.B. mit einem Frequenzverhältnis von 1:1,001 bis 1:2 oder bis 1:1,5.

Bei einer Bahnkurve, die durch Überlagerung der Hin- und Herbewegung entlang zweier Achsen bei unterschiedlichen Frequenzen und/oder mit Phasenversatz erzeugbar ist, liegen die Achsen bevorzugt in der Ebene des Querschnitts des Behälters. Bei einer Bahnkurve, die durch Überlagerung der Hin- und Herbewegung entlang drei Achsen gebildet wird, liegen bevorzugt zwei der Achsen in der Querschnittsebene des Behälters und die dritte Achse steht in einem Winkel zu dieser Querschnittsebene. Generell bevorzugt stehen die linearen Bewegungsachsen im rechten Winkel aufeinander. Generell umfasst die Bahnkurve keine Rotation des Behälters um seine eigene Achse.

Generell ist die Vorrichtung eingerichtet, den Behälter entlang einer Bahnkurve anzutreiben, die durch Überlagerung der Hin- und Herbewegung zumindest zweier sich überlagernder linearer Achsen gebildet wird, die in einem Winkel aufeinander stehen, wobei die Hin- und Herbewegung entlang der linearen Achsen bei unterschiedlichen Frequenzen und/oder mit Phasenversatz erfolgt. Die linearen Achsen, entlang derer die sich überlagernden Hin- und Herbewegungen bei unterschiedlicher Frequenz und/oder mit Phasenversatz verlaufen, bilden die Bahnkurve entlang derer die Hin- und Herbewegung des Behälters erfolgt, zu der die Vorrichtung eingerichtet ist.

Durch die Bewegung des Behälters entlang der Bahnkurve ist die Vorrichtung eingerichtet, den Mischung relativ zum Behälter zu beschleunigen, so dass im Behälter enthaltene Feststoffe und/oder Flüssigkeiten durch die Beschleunigung gegen die Behälterwand und durch die Bewegung entlang der oder gegen die Behälterwand geschert und dadurch intensiv gemischt werden.

Dadurch, dass die Bahnkurve durch die unterschiedlichen Frequenzen und/oder den Phasenversatz der sich überlagernden Bewegungen entlang der linearen Achsen einstellbar oder vorbestimmt sein können, ist die Vorrichtung zur Hin- und Herbewegung des Behälters entlang der Bahnkurve und zur Relativbewegung der Feststoffe und/oder Flüssigkeiten und der Mischung gegenüber dem Behälter eingerichtet.

Generell bevorzugt ist der Behälter nicht drehangetrieben und weiter bevorzugt nicht oder nicht vollständig drehbar, z.B. um maximal 30° oder um maximal 20° oder 10° um seine Mittelachse drehbar geführt. Generell bevorzugt ist der Behälter ausschließlich zu einer Hin- und Herbewegung entlang einer durch nur einen Hebel mit Exzenterantrieb angetrieben oder entlang einer Bahnkurve angetrieben, z.B. durch einen ersten und einen zweiten Hebel, jeweils mit Exzenterantrieb bei verschiedenen Frequenzen und/oder mit Phasenversatz angetrieben.

Die durch die bei zwei Hebeln einstellbaren verschiedenen Frequenzen und/oder den Phasenversatz der sich überlagernden Bewegungen entlang zumindest zweier linearer Achsen einstellbare oder vorbestimmte Bahnkurve beschleunigt Feststoffe und/oder Flüssigkeiten und der Mischung dieser relativ zum Behälter. Durch die Hin- und Herbewegung des Behälters werden die Feststoffe und/oder Flüssigkeiten und die Mischung dieser zur Bewegung gegen die Behälterinnenwand angetrieben.

Durch die Bahnkurve können der Einfalls- und Ausfallswinkel der Feststoffe und/oder Flüssigkeiten und der Mischung dieser gegen die Behälterwand bestimmt werden. Überdies ist die Vorrichtung optional eingerichtet, den Behälter mit einstellbarer oder vorbestimmter Beschleunigung und Geschwindigkeit entlang der Bahnkurve zu bewegen. Dadurch, dass die Vorrichtung für eine einstellbare oder vorbestimmte Bahnkurve und/oder eine einstellbare oder vorbestimmte Beschleunigung und/oder eine einstellbare oder vorbestimmte Geschwindigkeit entlang der Bahnkurve der Hin- und Herbewegung des Behälters eingerichtet ist, werden Feststoffe und/oder Flüssigkeiten und der Mischung dieser mit einstellbarer oder vorbestimmter Beschleunigung und/oder Geschwindigkeit relativ gegen den Behälter angetrieben und erlaubt eine vorbestimmte oder kontinuierliche Anpassung des Verfahrens an die Feststoffe und/oder Flüssigkeiten und an die Mischung dieser.

Generell kann eine Bahnkurve von zumindest zwei überlagerten Einzelschwingungen gebildet sein, bevorzugt gleicht eine Bahnkurve der durch Überlagerung von Hin- und Herbewegungen entlang zumindest zweier linearer Bewegungsachsen bei jeweils unterschiedlichen Frequenzen und/oder durch Phasenversatz erzeugbaren Bahnkurve. Eine Hin- und Herbewegung entlang einer Bahnkurve, die der Hin- und Herbewegung entlang aufeinanderstehender linearer Bewegungsachsen gleicht, die sich überlagern, weisen unterschiedliche Frequenzen auf und/oder haben einen Phasenversatz zueinander. Generell ist daher optional eine Bahnkurve keine Kreisbahn.

Der Unterschied der Frequenzen kann z.B. zumindest 0,01 Hz und/oder 0,01 % bis 900% betragen. Der Phasenversatz der Hin- und Herbewegungen entlang der linearen Achsen kann z.B. von 0,01° bis 180°, bevorzugt 1 bis 179° von 360°, die einer vollständigen Hin- und Herbewegung entspricht, betragen. Dabei sind 0,01 bis 180° einer vollständigen Hin- und Herbewegung von 360° gleich 0,0028 % bis 50% einer vollständigen Hin- und Herbewegung, 1 bis 179° von 360° sind gleich 0,28% bis 49,7% einer vollständigen Hin- und Herbewegung.

Dabei stehen die linearen Bewegungsachsen z.B. senkrecht oder in einem anderen Winkel, z.B. 5° bis 85° zueinander, insbesondere in der Ebene des Querschnitts des Behälters und/oder senkrecht zu einer Mittelachse des Behälters. Optional enthält die Bahnkurve zumindest einen gradlinigen Abschnitt, dessen Ende z.B. ein Scheitelpunkt der Bahnkurve ist, an dem die Feststoffe und/oder Flüssigkeiten und der Mischung dieser von der Behälterwand bzw. gegen die Behälterwand beschleunigt werden.

Zur Einstellung unterschiedlicher Frequenzen und/oder eines Phasenversatzes der überlagerten Hin- und Herbewegungen entlang zumindest zweier linearer Bewegungsachsen können diese Hin- und Herbewegungen durch ein Getriebe oder eine Kulissenführung miteinander gekoppelt sein und von einem Motor angetrieben sein. Dabei kann ein von einem Motor angetriebenes Getriebe, das die Hin- und Herbewegung entlang der Bahnkurve einstellt, ein festes Übersetzungsverhältnis zwischen den sich überlagernden Bewegungen entlang jeder Achse aufweisen, oder ein einstellbares Übersetzungsverhältnis, z.B. ein kontinuierlich oder stufenweise schaltbares Getriebe sein. Optional kann das Getriebe schlupfbehaftet sein, z.B. einen Riemenantrieb aufweisen oder ein Reibradgetriebe sein.

Die Abtriebsdrehzahl des Getriebes, das die Hin- und Herbewegung des Behälters antreibt, beträgt bevorzugt zumindest 1 Hz, bevorzugter zumindest 2,5 Hz, bevorzugter zumindest 5 Hz, bevorzugter zumindest 7 Hz. z.B. bis 50 Hz, bis 40 Hz, bis 30 Hz, bis 20 Hz oder bis 10 Hz. Dabei ist die Abtriebsdrehzahl des Getriebes gleich der Frequenz der Hin- und Herbewegung.

Alternativ kann die Hin- und Herbewegung entlang jeder der linearen Bewegungsachsen von einem separaten Motor angetrieben sein, wobei für die Zwecke der Erfindung die niedrigere Abtriebsdrehzahl die Frequenz der Hin- und Herbewegung ist und die Frequenz der Abfolge der Bahnsegmente bildet. In jeder Ausführungsform kann die Drehzahl jedes Antriebsmotors gesteuert sein, fest eingestellt oder über die Dauer des Verfahrens veränderlich.

Dabei erlaubt die Vorrichtung, dass die Bahnkurve die Feststoffe und/oder Flüssigkeiten und der Mischung dieser in einer definierten Richtung auf einen gezielten Ort der Behälterinnenwandung gezielt beschleunigt. Dabei kann die Geometrie des Behälters und dessen Innenwandung in Verbindung mit der Bahnkurve den Mischvorgang unterstützen, so dass die Bahnkurve abhängig von Form und Größe des Behälterquerschnitts eingestellt werden kann.

Optional ist die Vorrichtung eingerichtet, die Bahnkurve der Hin- und Herbewegung und/oder die Beschleunigung und/oder Geschwindigkeit der Hin- und Herbewegung während des Verfahrens zu ändern, z.B. in einer ersten Phase die Hin- und Herbewegung entlang einer ersten Bahnkurve und mit einer ersten Beschleunigung und Geschwindigkeit einzustellen und die Hin- und Herbewegung in einer anschließenden zweiten Phase entlang einer geänderten Bahnkurve und/oder geänderten Beschleunigung und/oder Geschwindigkeit einzustellen.

Weiter optional ist die Hin- und Herbewegung in einer ersten Phase eine lineare Hin- und Herbewegung und in einer zweiten Phase eine Hin- und Herbewegung entlang ineinander übergehender Bahnkurven. Dabei kann die Bahnkurve z.B. durch ein Getriebe bestimmt sein, das die Bewegung des Behälters antreibt.

Die Vorrichtung erlaubt durch die Einstellung der Bahnkurve und Beschleunigung der Hin- und Herbewegung des Behälters eine vorbestimmte oder dynamisch veränderbare und gerichtete Beschleunigung der Inhaltsstoffe als Prozessguts relativ zum Behälter.

In einer Ausführungsform, in der der Behälter in einer ersten Phase zu einer linearen Hin- und Herbewegung gesteuert angetrieben sein kann, ist die Vorrichtung eingerichtet, Feststoffe und/oder Flüssigkeiten und die Mischung dieser mit einer steuerbaren Beschleunigung senkrecht gegen die Behälterwand zu bewegen, die signifikant größer als die Erdbeschleunigung und daher im Wesentlichen unabhängig von der Erdbeschleunigung ist, z.B. mit einem Beschleunigungsmaximum von zumindest 15 m/s², bevorzugt 25 m/s², bevorzugt zumindest 50 m/s² oder zumindest 100 m/s² oder zumindest 200 m/s² oder zumindest 350 m/s² z.B. jeweils bis 500 m/s².

Generell kann die Vorrichtung eingerichtet sein, den Behälter mit einem Beschleunigungsmaximum von zumindest 20 m/s² oder mit zumindest 100 m/s², z.B. zumindest 200 m/s², bevorzugt bis zu 1000 m/s² oder bis zu 300 m/s² entlang der Bahnsegmente, z.B. in einem Scheitelpunkt der Bahnsegmente, zu beschleunigen.

Der Behälter ist bevorzugt zu einer Hin- und Herbewegung mit einem Beschleunigungsmaximum von zumindest 0,5 m/s² oder zumindest 1 m/s² oder zumindest 2 m/s² zumindest 3,5 m/s², bevorzugt zumindest 60 m/s², bevorzugter zumindest 100 m/s², zumindest 150 m/s², zumindest 160 m/s², zumindest 200 m/s², z.B. jeweils bis zu 300 m/s² oder 450 m/s², bis zu 260 m/s² oder bis zu 250 m/s² entlang jeder von zwei Achsen angetrieben. Generell bevorzugt ist der Behälter in Kombination mit der Beschleunigung zu einer mittleren Geschwindigkeit von zumindest 0,5 m/s, bevorzugt zumindest 2 m/s, bevorzugter zumindest 3,5 m/s, z.B. bis 10 m/s oder bis 20m/s oder bis 6 m/s, z.B. 3 bis 4 m/s, jeweils entlang einer der Achsen, bevorzugt entlang jeder Achse angetrieben. Dabei ist der Weg der Bewegung entlang zumindest einer Achse, bevorzugt entlang jeder Achse z.B. 0,1 cm bis 24 cm.

Der Behälter kann z.B. zu einer Hin- und Herbewegung angetrieben sein, die sich entlang jeder Achse über einen Weg von zumindest 1 mm oder zumindest 2,5 mm, zumindest 1 cm, bevorzugter zumindest 2 cm oder zumindest 5 cm, zumindest 10 cm oder zumindest 15 cm, z.B. jeweils bis 100 cm, bis 50 cm, bis 30 cm oder bis 20 cm erstreckt. Weiter bevorzugt ist die Hin- und Herbewegung des Behälters harmonisch. Die Hin- und Herbewegung des Behälters kann in einer ersten Phase linear sein, generell ist die Bahnkurve nicht-linear und kann z.B. sinusförmig, schleifenförmig oder bogenförmig sein, bevorzugt entlang einer sogenannten Lissajous-Figur oder Hypozykloide verlaufen, die bevorzugt in der Ebene liegt, bzw. zweidimensional, optional dreidimensional ist. Bevorzugt ist die Hin- und Herbewegung in einer ersten Phase linear und in einer zweiten Phase entlang zumindest zweier ineinander übergehender, nicht-linearer Bahnsegmente, die jeweils zumindest einen Scheitelpunkt enthalten, zu einer Bahnkurve ausgebildet. Denn generell fördert eine nicht-lineare Bahnkurve, z.B. eine Bewegung entlang einer Bahnkurve deren Bahnsegmente zumindest jeweils einen Scheitelpunkt aufweisen, ein Aufprallen von Feststoffen und/oder Flüssigkeiten und der Mischung dieser z.B. senkrecht auf die Behälterwand sowie eine Bewegung entlang der Behälterwand.

Bevorzugt umfasst die Hin- und Herbewegung die Hin- und Herbewegung entlang einer Bahnkurve, die zumindest zwei, bevorzugt zumindest drei, bevorzugter zumindest vier unterschiedliche Bahnsegmente umfasst, die jeweils zumindest einen Scheitelpunkt aufweisen und bevorzugt in zeitlicher Abfolge, bevorzugt programmgesteuert ineinander übergehen. Jede der Bewegungsachsen, entlang derer sich die Bewegungen zu einer Bahnkurve überlagern, für sich kann linear oder bogenförmig verlaufen, so dass die nicht-lineare Bewegung des Behälters entlang einer Abfolge von Bahnsegmenten aus der Überlagerung der Bewegungen entlang zweier Bewegungsachsen erzeugt wird. Die Scheitelpunkte und zwischenliegenden Abschnitte eines Bahnsegments werden durch den Frequenzunterschied und/oder die Phasenlage der überlagerten Hin- und Herbewegungen entlang zumindest zweier Achsen bestimmt. Generell kann die Vorrichtung eingerichtet sein, den Frequenzunterschied und/oder die Phasenlage während der Hin- und Herbewegung zu verändern.

Generell bevorzugt ist die Behälterwand die umfänglich geschlossene Wand des Behälters, die sich um eine Mittelachse und zwischen jeweils endständigen gegenüberliegenden Querschnitten bzw. daran angebrachten Deckeln erstreckt. Der Behälter hat einen optional kreisförmigen Querschnitt, der sich um eine Mittelachse erstreckt und von der Behälterwand aufgespannt wird. Generell bevorzugt werden die endständigen Querschnittsöffnungen des Behälters von jeweils einem Deckel überdeckt, von denen optional zumindest einer eine Durchgangsöffnung aufweist.

Optional, insbesondere zur Verwendung für ein kontinuierliches Verfahren zum Zerkleinern, ist die endständige zweite Querschnittsöffnung des Behälters, die dem Messer gegenüberliegt, offen, insbesondere unterhalb des Messers angeordnet. In dieser Ausführungsform kann ist der Behälter optional zur Bewegung entlang der Hin- und Herbewegung innerhalb einer umfassenden Auffangvorrichtung angeordnet, die aus der offenen endständigen Querschnittsöffnung, die gegenüber dem Messer angeordnet ist, austretende Stücke aufzunehmen. Eine Auffangvorrichtung kann ein Gehäuse oder ein Trichter sein.

Generell ist bevorzugt, dass zumindest ein Bahnsegment einen Scheitelpunkt aufweist, in dem sich die Richtung des Bahnsegments um zumindest 90°, bevorzugter um zumindest 120°, noch bevorzugter um zumindest 180° ändert, z.B. innerhalb von maximal 24,5%, maximal 24%, maximal 23%, maximal 22%, maximal 21%, maximal 20%, maximal 15%, oder maximal 10%, bevorzugter maximal 5%, maximal 3% oder maximal 2% oder maximal 1% der Länge eines Bahnsegments. Denn ein Scheitelpunkt des Bahnsegments führt zu einer starken Relativbeschleunigung der Feststoffe und/oder Flüssigkeiten und der Mischung dieser gegen den Behälter.

Die Steuerung des Antriebs des Behälters ist optional abhängig vom Signal eines Sensors, bevorzugt eines akustischen Sensors gesteuert, der Schwingungen, insbesondere Geräusche des Behälters während der Hin- und Herbewegung, insbesondere während der ersten und/oder während der zweiten Phase, aufnimmt. Der akustische Sensor kann z.B. an der Außenoberfläche des Behälters angebracht sein oder in einem Abstand vom Behälter in einer Stellung festgelegt sein, an der die Hin- und Herbewegung des Behälters vorbeiläuft. Bevorzugt ist der akustische Sensor in geringem Abstand, z.B. von 0,5 bis 5 cm, vom Scheitelpunkt der Hin- und Herbewegung festgelegt, z.B. an einem Gestell festgelegt, gegenüber dem der Behälter entlang der Bahnkurve bewegt wird. Der akustische Sensor kann ein Vibrationssensor, z.B. ein Mikrophon sein. In dieser Ausführungsform kann die Steuerung der Hin- und Herbewegung eingerichtet sein, bei Änderung des Signals, das der akustische Sensor abgibt, um eine vorbestimmte Abweichung innerhalb einer vorbestimmten Zeit der Hin- und Herbewegung, und/oder bei Erreichen eines vorbestimmten Signals, das der akustische Sensor abgibt, die Hin- und Herbewegung mit einer geänderten Geschwindigkeit und/oder mit geändertem Phasenversatz ablaufen zu lassen und/oder von einer linearen Bewegung in eine Bahnkurve zu steuern, insbesondere von einer ersten Phase zu einer zweiten Phase der Hin- und Herbewegung zu steuern.

Der Sensor kann auch ein am Behälter angebrachter optischer Sensor sein, z.B. ein Trübungssensor.

Optional ist am Behälter eine Einrichtung zur Erzeugung elektrischer Spannung angebracht, insbesondere eine Einrichtung mit einem Magneten und einer relativ zum Magneten beweglich angeordneten Spule, die eingerichtet sind, bei Relativbewegung zueinander elektrische Spannung zu erzeugen. Diese Einrichtung ist bevorzugt mittels einer elektrischen Leitung mit einem am Behälter angebrachten Sender verbunden, um den Sender mit elektrischer Spannung zu beaufschlagen. Der Sender ist bevorzugt mittels einer Datenleitung mit zumindest einem der Sensoren verbunden, um Sensorsignale zu empfangen. Dabei ist der Sender z.B. eingerichtet, empfangene Sensorsignale zu senden. Weiterhin kann der Sensor mittels einer elektrischen Leitung mit der Einrichtung zur Erzeugung elektrischer Spannung verbunden sein. In dieser Ausführungsform ist die Vorrichtung eingerichtet, dass ein am Behälter angebrachter Sensor und ein Sender durch die Einrichtung zur Erzeugung elektrischer Spannung beaufschlagt werden können, sobald der Behälter entlang der Bahnkurve bewegt wird. Entsprechend kann die Vorrichtung ohne ein elektrisches Kabel ausgebildet sein, das sich zwischen einem Gestell, gegenüber dem der Behälter bewegt wird, und dem Behälter erstreckt.

Bevorzugt weist der Behälter an seiner zweiten Querschnittsöffnung einen zweiten Deckel auf, der zu öffnen bzw. von dem Innenvolumen wegzubewegen ist, um das Innenvolumen zum Entnehmen bzw. Herausfallen- oder Fließen der Masse nach der Hin- und Herbewegung öffnen zu können. Bevorzugt ist der Behälter mit seiner ersten Querschnittsöffnung oberhalb der zweiten Querschnittsöffnung angeordnet. Generell kann der Behälter für ein satzweises Verfahren nach Einfüllen von Lebensmittelstücken, die unmittelbar zuvor durch Schneiden von Lebensmittelrohstoffen, die durch den Zuführschacht zugeführt werden, mittels des an der ersten Querschnittsöffnung angebrachten Messers erzeugt sind, optional mit einem an der ersten Querschnittsöffnung angeordneten ersten Deckel eingesetzt werden, wobei die Lebensmittelstücke anschließend durch Hin- und Herbewegen des Behälters belastet und optional mit zugesetzten Zusatzstoffen gemischt werden. Alternativ kann die erste Querschnittsöffnung durch einen oberen Deckel geschlossen werden, der keine Einlassöffnung aufweist, mit anschließendem Hin- und Herbewegen des Behälter und Öffnen eines zweiten Deckels zum Herausfallenlassen der Lebensmittelstücke.

Generell, bevorzugt bei einem Behälter, der einen zumindest dreieckigem Querschnitt oder mehreckigem Querschnitt aufweist, kann die Bewegung entlang einer Abfolge von Bahnsegmenten erfolgen, die jeweils zumindest einen Scheitelpunkt aufweisen, bevorzugt jedes Bahnsegment mit einer Anzahl von Scheitelpunkten, die gleich der Anzahl der Ecken des Querschnitts des Behälters ist. Alternativ oder zusätzlich kann die Anzahl der Scheitelpunkte jedes Bahnsegments gleich der Anzahl der Ecken des Querschnitts des Behälters. Die Scheitelpunkte können z.B. einen Winkel umfassen, der zumindest doppelt so groß, bevorzugt zumindest dreimal so groß ist, wie der Winkel, der von einer der angrenzenden Bahnkurven umfasst ist. Optional ist der Zuführschacht in dem Bereich angeordnet, in dem die Bahnkurve einen Scheitelpunkt aufweist.

Die Bewegung entlang zweier Achsen, bzw. die Hin- und Herbewegung, kann durch einen Antriebsmotor oder eine Handkurbel angetrieben sein, wobei die unterschiedlichen Frequenzen der Bewegungen entlang der Achsen z.B. mittels einer Kulissenführung, eines exzentrischen Antriebs und/oder mittels eines Getriebes erfolgt. Alternativ kann die Hin- und Herbewegung durch zwei gesteuerte Antriebsmotoren angetrieben sein. Ein Antriebsmotor kann ein Linearantrieb sein, z.B. ein elektrischer oder hydraulischer bzw. pneumatischer linear wirkender Antrieb, oder ein Rotationsmotor.

Die Erfindung wird nun genauer mit Bezug auf die Figuren beschrieben, die schematisch in
- Fig. 1 eine Ausführungsform der Vorrichtung,
- Fig. 2 Ausführungsformen von Vorsprüngen der Behälterwand,
- Fig. 3 ein in einem Behälter reversibel anzuordnendes Gitter,
- Fig. 4A und 4B Ausführungsformen eines Behälters mit darin angeordnetem Gitter ,
- Fig. 5 ausschnittsweise eine Ausführungsform eines Behälters mit Antrieb und
- Fig. 6 eine Ausführungsform mit bevorzugtem Antrieb
zeigen.

In den Figuren bezeichnen gleiche Bezugsziffern funktionsgleiche Elemente.

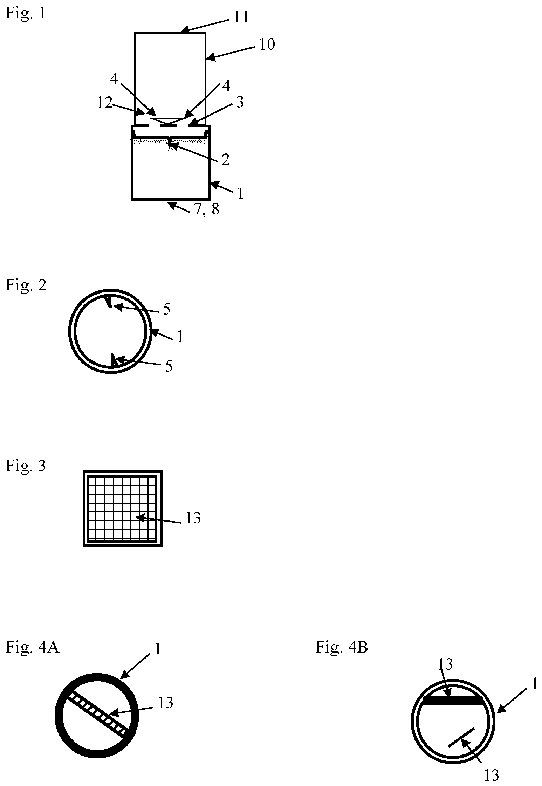

In Fig. 1 ist ein Behälter 1 im Längsschnitt gezeigt, dessen erste endständige Querschnittsöffnung 2 Einlassöffnungen 3 aufweist. An der endständigen Querschnittsöffnung 2 ist ein Messer 4 angebracht. Ein Zuführschacht 10 weist eine Zuführöffnung 11 und angrenzend an einen Bereich, in dem der Behälter 1 zu einer Hin- und Herbewegung, insbesondere einer Bahnkurve angetrieben ist, eine Auslassöffnung 12 auf. Die der ersten Querschnittsöffnung 2 gegenüberliegende zweite Querschnittsöffnung 7 ist durch einen zweiten Deckel 8 reversibel oder fest verschlossen.

Die Fig. 2 zeigt eine Ausführungsform des Behälters 1 im Querschnitt mit Vorsprüngen 5, die in das Behältervolumen ragen.

Die Fig. 3 zeigt ein Gitter 13, das von einem Rahmen 14 eingefasst ist und entlang der Längsmittelachse des Behälters 1 angeordnet werden kann.

Die Fig. 4A zeigt im Querschnitt den Behälter 1 mit einem entlang seiner Längsmittelachse angeordneten Gitter 13.

Die Fig. 4B zeigt eine alternative Anordnung von Gittern 13, die in einem Abstand von der Längsmittelachse des Behälters 1 angeordnet sind.

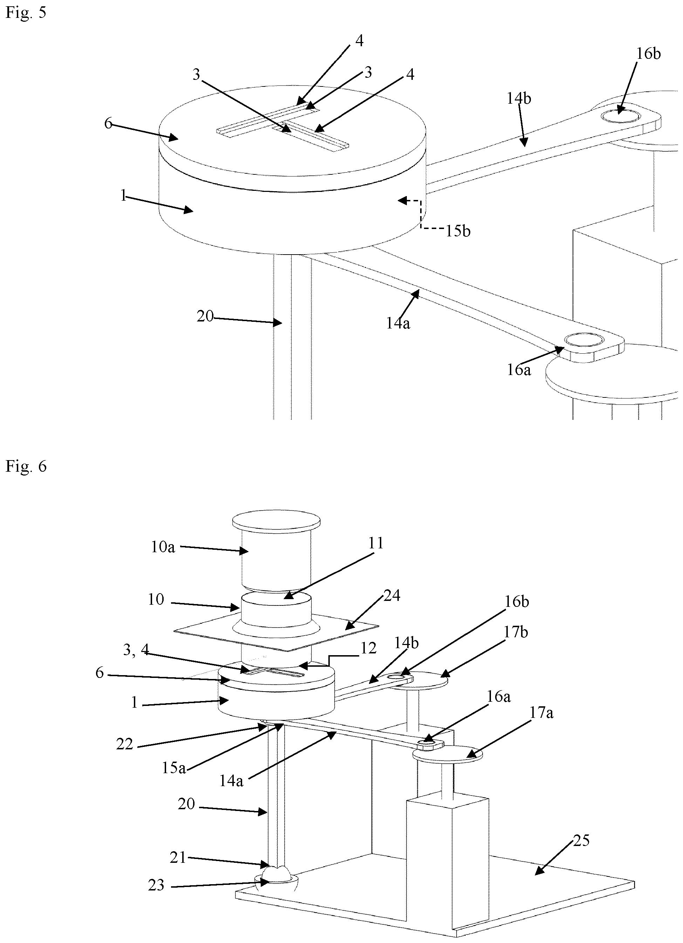

Die Fig. 5 zeigt eine Ausführungsform des Behälters 1, dessen erste endständige Querschnittsöffnung von einem ersten Deckel 6 überdeckt ist, in dem zwei in 90° zueinander versetzte Messer 4 und parallel zu jedem Messer 4 jeweils eine Einlassöffnung 3 angeordnet sind. Der Behälter ist, z.B. mittels einer Behälteraufnahme, mit dem zweiten Ende 22 eines Schwenkarms 20 verbunden, dessen gegenüberliegendes erstes Ende 21 schwenkbar gelagert ist. Der Antrieb weist einen ersten Hebel 14a auf, der zur Hin- und Herbewegung von einem ersten Exzenterantrieb 17a angetrieben ist, und einen zweiten Hebel 14b, der zur Hin- und Herbewegung von einem zweiten Exzenterantrieb 17b angetrieben ist.

Die Fig. 6 zeigt den Behälter 1 von Fig. 5, wobei in einem Abstand zum ersten Deckel 6 der Zuführschacht 10 in dem Bereich angeordnet ist, in dem sich der erste Deckel 6 bzw. der Behälter 1 zumindest abschnittsweise bei der Hin- und Herbewegung bewegt. Der Zuführschacht 10 ist an und durch einen Gehäusedeckel 24 angeordnet. Zum Bewegen von Feststoffen, z.B. festen Lebensmitteln, weist die Vorrichtung bevorzugt einen entlang des Zuführschachts 10 verschieblichen Stempel 10a auf.

Der Schwenkarm 20 ist mit seinem ersten Ende 21 in einem Schwenklager 23 frei schwenkbar gelagert, das bevorzugt ein Kugelgelenk oder Kardangelenk ist. Das zweite Ende 22 des Schwenkarms 20 ist am ersten Ende 15a des ersten Hebels 14a schwenkbar angelenkt und am ersten Ende 15b (in der Fig. 6 verdeckt) eines zweiten Hebels 14b schwenkbar angelenkt, der in einem Winkel von 60 bis 120° zum ersten Hebel 14a angeordnet ist. Wie bevorzugt sind erster und zweiter Hebel 14a, 14b in einer Ebene angeordnet, die etwa senkrecht zur Erstreckung des Schwenkarms 20 liegt, optional parallel zu der Ebene, in der das Gestellteil 2 liegt. Alternativ können einer oder beide von erstem und zweiten Hebel 14a, 14b in einem Winkel von z.B. 85 bis 45° oder bis 60° zur Längsachse des Schwenkarms 20 angeordnet sein. Der erste Hebel 14a ist durch einen an seinem zweiten Ende 16a angelenkten ersten Exzenterantrieb 17a zur Hin- und Herbewegung entlang seiner Längsachse angetrieben. Der zweite Hebel 14b ist durch einen an seinem zweiten Ende 16b angelenkten zweiten Exzenterantrieb 17b zur Hin- und Herbewegung entlang seiner Längsachse angetrieben. Dadurch sind der erste Hebel 14a und der zweite Hebel 14b zur Verschwenkung des Schwenkarms 20 im Schwenklager 23 und zur Verschwenkung des zweiten Endes 22 des Schwenkarms 20 entlang der Längsachsen von erstem Hebel 14a und zweiten Hebel 14b eingerichtet, so dass die Vorrichtung eingerichtet ist, durch die Verschwenkung im Schwenklager 23 das zweite Ende 22 des Schwenkarms 20 von einem größeren in einen kleineren Abstand zur Auslassöffnung 12 des Zuführschachts, bzw. zur Ebene des Gestellteils 25 und zur Ebene des Gehäusedeckels 24 hin- und herzubewegen.

**Bezugszeichen:**

| | | | |
|---|---|---|---|
| 1 | Behälter | 14b | zweiter Hebel |
| 2 | endständige Querschnittsöffnung | 15a | erstes Ende des ersten Hebels |
| 3 | Einlassöffnung | 15b | erstes Ende des zweiten Hebels |
| 4 | Schneidkante, Messer | 16a | zweites Ende des ersten Hebels |
| 5 | Vorsprung | 16b | zweites Ende des zweiten Hebels |
| 6 | erster Deckel | 17a | erster Exzenterantrieb |
| 7 | zweite endständige Querschnittsöffnung | 17b | zweiter Exzenterantrieb |
| 8 | zweiter Deckel | 20 | Schwenkarm |
| 10 | Zuführschacht | 21 | erstes Ende des Schwenkarms |
| 10a | Stempel | 22 | zweites Ende des Schwenkarms |
| 11 | Zuführöffnung | 23 | Schwenklager |
| 12 | Auslassöffnung | 24 | Gehäusedeckel |
| 13 | Gitter | 25 | Gestellteil |
| 14a | erster Hebel | | |

## Patentansprüche

1. Vorrichtung zum Zerkleinern von Feststoffen zu Stücken,
die einen Behälter (1) aufweist, an dessen erster endständiger Querschnittsöffnung (2) zumindest eine Schneidkante (4) und eine Einlassöffnung (3) angeordnet sind,
mit einem Zuführschacht (10), dessen Auslassöffnung (12) im Bereich der ersten Querschnittsöffnung (2) angeordnet ist und dessen gegenüberliegende Zuführöffnung (11) von seiner Auslassöffnung (12) beabstandet ist, **dadurch gekennzeichnet, dass** der Behälter (1) parallel oder in einem Winkel zu der Ebene, in der sich die erste Querschnittsöffnung (2) erstreckt, zu einer Hin- und Herbewegung angetrieben ist.

2. Vorrichtung nach Anspruch 1, **dadurch gekennzeichnet, dass** die erste Querschnittsöffnung (2) die Einlassöffnung (3) bildet und die zumindest eine Schneidkante (4) in der Ebene der ersten Querschnittsöffnung (2) oder innerhalb des Behälters (1) angebracht ist.

3. Vorrichtung nach Anspruch 1, **dadurch gekennzeichnet, dass** die erste Querschnittsöffnung (2) von einem ersten Deckel (6) überdeckt ist, der eine Einlassöffnung (3) aufweist und die zumindest eine Schneidkante (4) in einem Bereich angebracht ist, der sich von der Ebene der Einlassöffnung (3) bis in den Behälter (1) erstreckt.

4. Vorrichtung nach einem der voranstehenden Ansprüche, **dadurch gekennzeichnet, dass** zumindest zwei Schneidkanten (4) in einem Winkel von 60-120° zueinander in einer gemeinsamen Ebene an der ersten endständigen Querschnittsöffnung (2) angeordnet sind.

5. Vorrichtung nach einem der voranstehenden Ansprüche, **dadurch gekennzeichnet, dass**, der Behälter (1) zu einer Hin- und Herbewegung angetrieben ist, die linear ist oder zu einer Hin- und Herbewegung entlang einer Bahnkurve angetrieben ist, die durch Überlagerung der Bewegung entlang zumindest zweier Achsen, die in einem Winkel zueinander liegen, bei verschiedenen Frequenzen erhältlich ist.

6. Vorrichtung nach Anspruch 5, **dadurch gekennzeichnet, dass** die Bahnkurve eine Abfolge von Bahnsegmenten umfasst, die durch die Überlagerung der Hin- und Herbewegung entlang zumindest zweier Achsen mit verschiedenen Frequenzen und/oder mit Phasenversatz erzeugbar sind und die jeweils genau eine vollständige Hin- und Herbewegung entlang der Achse, entlang derer die Hin- und Herbewegung mit der niedrigeren Frequenz erfolgt, umfassen und jeweils zumindest einen Scheitelpunkt aufweisen, in dem sich die Richtung um zumindest 90° innerhalb von maximal 24,5% der Länge eines Bahnsegments ändert.

7. Vorrichtung nach Anspruch 6, **dadurch gekennzeichnet, dass** die Auslassöffnung (12) des Zuführschachts (10) im Bereich des Scheitelpunkts angeordnet ist.

8. Vorrichtung nach einem der voranstehenden Ansprüche, **dadurch gekennzeichnet, dass** der Behälter (1) durch einen Antrieb angetrieben ist, der ein Motor oder eine Handkurbel ist, wobei der Antrieb durch ein Getriebe oder eine Kulissenführung die überlagerten Hin- und Herbewegungen entlang zumindest zweier linearer Bewegungsachsen miteinander koppelt.

9. Vorrichtung nach einem der voranstehenden Ansprüche, **dadurch gekennzeichnet, dass** die der ersten Querschnittsöffnung (2) gegenüberliegende endständige zweite Querschnittsöffnung (7) des Behälters durch einem zweiten Deckel (8) reversibel verschließbar ist oder durch eine zweiten Deckel (8) überdeckt, der fest mit der Wand des Behälters (1) verbunden ist.

10. Vorrichtung nach einem der voranstehenden Ansprüche, **gekennzeichnet durch** ein Gitter (13), das reversibel im Behälter (1) anzuordnen ist und einen Umfang aufweist, der parallel zur Längsachse oder entlang der Längsachse des Behälters (1) in diesem klemmt.

11. Vorrichtung nach Anspruch 9 oder 10, **dadurch gekennzeichnet, dass** das Gitter (13) aus beabstandeten Stegen besteht oder gekreuzte Stege aufweist, die aus Rundstangen oder in einem Lochblech gebildet sind.

12. Vorrichtung nach einem der Ansprüche 8 bis 11, **dadurch gekennzeichnet, dass** der Antrieb einen Schwenkarm (20) aufweist, dessen erstes Ende (21) in einem Schwenklager (23) schwenkbar gelagert ist und an dessen gegenüberliegendem zweitem Ende (22) der Behälter (1) angebracht, mit einem am zweiten Ende (22) des Schwenkarms (20) angebrachten ersten Hebel (14a), der von einem ersten Exzenterantrieb (17a) zur linearen Hin- und Herbewegung angetrieben ist.

13. Vorrichtung nach einem der Ansprüche 8 bis 11, **dadurch gekennzeichnet, dass** der Antrieb einen Schwenkarm (20) aufweist, dessen erstes Ende (21) in einem Schwenklager (23) schwenkbar gelagert ist und an dessen gegenüberliegendem zweitem Ende (22) der Behälter (1) angebracht, mit einem am zweiten Ende (22) des Schwenkarms (20) angebrachten ersten Hebel (14a) und zweiten Hebel (14b), die in einem Winkel von 30 bis 150° zueinander angeordnet sind, wobei der erste Hebel (14a) von einem ersten Exzenterantrieb (17a) zur Hin- und Herbewegung angetrieben ist und der zweite Hebel (14b) von einem zweiten Exzenterantrieb (17b) zur Hin- und Herbewegung angetrieben ist.

14. Vorrichtung nach Anspruch 13, **dadurch gekennzeichnet, dass** der erste Exzenterantrieb (17a) und der zweite Exzenterantrieb (17b) durch ein Getriebe verbunden sind, das von genau einem Motor angetrieben ist.

15. Vorrichtung nach einem der voranstehenden Ansprüche, **gekennzeichnet durch** eine am Behälter (1) angebrachte Einrichtung zur Erzeugung elektrischer Spannung, die einen Magneten und eine relativ zum Magneten beweglich angeordnete Spule aufweist und die eingerichtet sind, bei Relativbewegung zueinander elektrische Spannung zu erzeugen, wobei die Einrichtung zur Erzeugung elektrischer Spannung mittels einer elektrischen Leitung mit einem am Behälter angebrachten Sender verbunden ist, um den Sender mit elektrischer Spannung zu beaufschlagen, wobei der Sender mittels einer Datenleitung mit zumindest einem Sensor verbunden ist, um Sensorsignale zu empfangen und der Sender eingerichtet ist, empfangene Sensorsignale zu senden, wobei der Sensor mittels einer elektrischen Leitung mit der Einrichtung zur Erzeugung elektrischer Spannung verbunden ist.

16. Verfahren zum Zerkleinern von Feststoffen zu Stücken, **gekennzeichnet durch** Zuführen der Feststoffe in den Zuführschacht einer Vorrichtung nach einem der voranstehenden Ansprüche und Hin- und Herbewegen des Behälters.

17. Verfahren nach Anspruch 16, **gekennzeichnet durch** Zugeben von zumindest einem Zusatzstoff in den Behälter und Hin- und Herbewegen des Behälters entlang einer Bahnkurve mit einer Frequenz von zumindest 1 Hz.

## Claims

1. Device for comminuting solids into pieces,
which has a container (1), at the first end cross-sectional opening (2) of which at least one cutting edge (4) and one inlet opening (3) are arranged,
with a feed chute (10), the outlet opening (12) of which is arranged in the region of the first cross-sectional opening (2) and the opposite feed opening (11) of which is spaced from its outlet opening (12), **characterized in that** the container (1) is driven for a reciprocating movement parallel to or at an angle to the plane in which the first cross-sectional opening (2) extends.

2. Device according to claim 1, **characterized in that** the first cross-sectional opening (2) forms the inlet opening (3) and the at least one cutting edge (4) is mounted in the plane of the first cross-sectional opening (2) or inside the container (1).

3. Device according to claim 1, **characterized in that** the first cross-sectional opening (2) is covered by a first lid (6) which has an inlet opening (3) and the at least one cutting edge (4) is attached in a region which extends from the plane of the inlet opening (3) into the container (1).

4. Device according to one of the preceding claims, **characterized in that** at least two cutting edges (4) are arranged at an angle of 60-120° to each other in a common plane at the first terminal cross-sectional opening (2).

5. Device according to one of the preceding claims, **characterized in that** the container (1) is driven to a reciprocating movement which is linear or is driven to a reciprocating movement along a trajectory which is obtainable by superimposing the movement along at least two axes, which are at an angle to one another, at different frequencies.

6. Device according to claim 5, **characterized in that** the trajectory comprises a sequence of path segments which can be generated by superimposing the reciprocating movement along at least two axes at different frequencies and/or with phase offset and which each comprise exactly one complete reciprocating movement along the axis along which the reciprocating movement takes place at the lower frequency and each have at least one apex in which the direction changes by at least 90° within a maximum of 24.5% of the length of a path segment.

7. Device according to claim 6, **characterized in that** the outlet opening (12) of the feed chute (10) is arranged in the region of the apex.

8. Device according to one of the preceding claims, **characterized in that** the container (1) is driven by a drive which is a motor or a hand crank, the drive coupling the superimposed reciprocating movements along at least two linear axes of movement to one another by means of a gear or a link guide.

9. Device according to one of the preceding claims, **characterized in that** the terminal second cross-sectional opening (7) of the container opposite the first cross-sectional opening (2) can be reversibly closed by a second cover (8) or is covered by a second cover (8) which is firmly connected to the wall of the container (1).

10. Device according to one of the preceding claims, **characterized by** a grid (13) which is to be reversibly arranged in the container (1) and has a circumference which clamps in the container (1) parallel to the longitudinal axis or along the longitudinal axis of the container (1).

11. Device according to claim 9 or 10, **characterized in that** the grid (13) consists of spaced bars or has crossed bars which are formed from round bars or in a perforated plate.

12. Device according to one of claims 8 to 11, **characterized in that** the drive comprises a pivot arm (20), the first end (21) of which is pivotably mounted in a pivot bearing (23) and to the opposite second end (22) of which the container (1) is attached, with a first lever (14a) attached to the second end (22) of the pivot arm (20), which is driven by a first eccentric drive (17a) for linear reciprocating movement.

13. Device according to one of claims 8 to 11, **characterized in that** the drive has a swivel arm (20), the first end (21) of which is pivotably mounted in a pivot bearing (23) and to the opposite second end (22) of which the container (1) is attached, with a first lever (14a) and a second lever (14b) attached to the second end (22) of the pivot arm (20), which are arranged at an angle of 30 to 150° to one another, the first lever (14a) being driven by a first eccentric drive (17a) for reciprocating movement and the second lever (14b) being driven by a second eccentric drive (17b) for reciprocating movement.

14. Device according to claim 13, **characterized in that** the first eccentric drive (17a) and the second eccentric drive (17b) are connected by a transmission driven by exactly one motor.

15. Device according to one of the preceding claims, **characterized by** a device for generating electrical voltage, which is attached to the container (1), has a magnet and a coil arranged movably relative to the magnet and which are set up to generate electrical voltage when moving relative to one another, the device for generating electrical voltage being connected by means of an electrical line to a transmitter attached to the container, in order to apply electrical voltage to the transmitter, the transmitter being connected to at least one sensor by means of a data line in order to receive sensor signals and the transmitter being set up to transmit received sensor signals, the sensor being connected to the device for generating electrical voltage by means of an electrical line.

16. Process for comminuting solids into pieces, **characterized by** feeding the solids into the feed chute of a device according to one of the preceding claims and reciprocatinsly moving the container.

17. Process according to claim 16, **characterized by** adding at least one additive to the container and moving reciprocating the container along a trajectorywith a frequency of at least 1 Hz.

## Revendications

1. Dispositif de broyage de matières solides en morceaux,
qui présente un récipient (1), sur la première ouverture de section transversale (2) d'extrémité duquel sont disposées au moins une arête de coupe (4) et une ouverture d'entrée (3),
avec un puits d'alimentation (10) dont l'ouverture de sortie (12) est disposée dans la zone de la première ouverture de section transversale (2) et dont l'ouverture d'alimentation opposée (11) est espacée de son ouverture de sortie (12), **caractérisé en ce que** le récipient (1) est entraîné dans un mouvement de va-et-vient parallèlement ou selon un angle par rapport au plan dans lequel s'étend la première ouverture de section transversale (2).

2. Dispositif selon la revendication 1, **caractérisé en ce que** la première ouverture transversale (2) forme l'ouverture d'entrée (3) et l'au moins une arête de coupe (4) est montée dans le plan de la première ouverture transversale (2) ou à l'intérieur du récipient (1).

3. Dispositif selon la revendication 1, **caractérisé en ce que** la première ouverture transversale (2) est recouverte par un premier couvercle (6) qui présente une ouverture d'entrée (3) et l'au moins une arête de coupe (4) est montée dans une zone qui s'étend depuis le plan de l'ouverture d'entrée (3) jusqu'à l'intérieur du récipient (1).

4. Dispositif selon l'une des revendications précédentes, **caractérisé en ce qu'**au moins deux arêtes de coupe (4) sont disposées à un angle de 60 à 120° l'une par rapport à l'autre dans un plan commun sur la première ouverture transversale d'extrémité (2).

5. Dispositif selon l'une quelconque des revendications précédentes, **caractérisé en ce que**, le récipient (1) est entraîné dans un mouvement de va-et-vient qui est linéaire ou est entraîné dans un mouvement de va-et-vient le long d'une trajectoire qui peut être obtenue en superposant le mouvement le long d'au moins deux axes formant un angle entre eux à des fréquences différentes.

6. Dispositif selon la revendication 5, **caractérisé en ce que** de trajectoire comprend une succession de segments de trajectoire qui peuvent être obtenus par la superposition du mouvement de va-et-vient le long d'au moins deux axes à des fréquences différentes et/ou avec un déphasage et qui comprennent chacun exactement un mouvement de va-et-vient complet le long de l'axe le long duquel le mouvement de va-et-vient est effectué à la fréquence la plus basse et présentent chacun au moins un sommet dans lequel la direction change d'au moins 90° dans un maximum de 24,5% de la longueur d'un segment de trajectoire.

7. Dispositif selon la revendication 6, **caractérisé en ce que** l'ouverture de sortie (12) du puits d'alimentation (10) est disposée dans la zone du sommet.

8. Dispositif selon l'une quelconque des revendications précédentes, **caractérisé en ce que** le conteneur (1) est entraîné par un dispositif d'entraînement qui est un moteur ou une manivelle, le dispositif d'entraînement couplant entre eux les mouvements de va-et-vient superposés le long d'au moins deux axes de déplacement linéaires par l'intermédiaire d'un engrenage ou d'un guide à coulisse.

9. Dispositif selon l'une des revendications précédentes, **caractérisé en ce que** la deuxième ouverture transversale (7) du récipient, située à l'extrémité opposée à la première ouverture transversale (2), peut être fermée de manière réversible par un deuxième couvercle (8) ou est recouverte par un deuxième couvercle (8) qui est relié de manière fixe à la paroi du récipient (1).

10. Dispositif selon l'une quelconque des revendications précédentes, **caractérisé par** une grille (13) destinée à être disposée de manière réversible dans le récipient (1) et présentant une périphérie qui se bloque dans le récipient (1) parallèlement à l'axe longitudinal ou selon l'axe longitudinal du récipient.

11. Dispositif selon la revendication 9 ou 10, **caractérisé en ce que** la grille (13) est constituée de barrettes espacées ou présente des barrettes croisées formées par des barres rondes ou dans une tôle perforée.

12. Dispositif selon l'une des revendications 8 à 11, **caractérisé en ce que** l'entraînement comprend un bras pivotant (20) dont la première extrémité (21) est montée pivotante dans un palier de pivotement (23) et sur la deuxième extrémité opposée (22) duquel est monté le récipient (1), avec un premier levier (14a) monté sur la deuxième extrémité (22) du bras pivotant (20) et entraîné par un premier entraînement à excentrique (17a) pour effectuer un mouvement linéaire de va-et-vient.

13. Dispositif selon l'une des revendications 8 à 11, **caractérisé en ce que** l'entraînement comporte un bras pivotant (20) dont la première extrémité (21) est montée pivotante dans un palier de pivotement (23) et sur la deuxième extrémité (22) opposée duquel est monté le récipient (1), avec un premier levier (14a) et un deuxième levier (14b) montés sur la deuxième extrémité (22) du bras pivotant (20), disposés selon un angle compris entre 30 et 150° l'un par rapport à l'autre, le premier levier (14a) étant entraîné en mouvement de va-et-vient par un premier entraînement excentrique (17a) et le deuxième levier (14b) étant entraîné en mouvement de va-et-vient par un deuxième entraînement excentrique (17b).

14. Dispositif selon la revendication 13, **caractérisé en ce que** le premier entraînement excentrique (17a) et le deuxième entraînement excentrique (17b) sont reliés par une transmission qui est entraînée par exactement un moteur.

15. Dispositif selon l'une des revendications précédentes, **caractérisé par** un dispositif de génération de tension électrique monté sur le récipient (1), qui présente un aimant et une bobine disposée de manière mobile par rapport à l'aimant et qui sont conçus pour générer une tension électrique en cas de mouvement relatif l'un par rapport à l'autre, le dispositif de génération de tension électrique étant relié au moyen d'un câble électrique à un émetteur monté sur le récipient, pour alimenter l'émetteur en tension électrique, l'émetteur étant relié au moyen d'une ligne de données à au moins un capteur pour recevoir des signaux de capteur et l'émetteur étant agencé pour émettre des signaux de capteur reçus, le capteur étant relié au moyen d'une ligne électrique au dispositif de génération de tension électrique.

16. Procédé de broyage de solides en morceaux, **caractérisé par** l'amenée des solides dans le puits d'amenée d'un dispositif selon l'une des revendications précédentes et le déplacement en va-et-vient du récipient.

17. Procédé selon la revendication 16, **caractérisé par** l'ajout d'au moins un additif dans le récipient et le déplacement en va-et-vient du récipient le long d'une trajectoire ayant une fréquence d'au moins 1 Hz.
